# NEUE EUROPÄISCHE PATENTSCHRIFT

(11) **EP 0 976 635 B2**
(45) Veröffentlichungstag und Bekanntmachung des Hinweises auf die Entscheidung über den Einspruch: **19.01.2011**
(45) Hinweis auf die Patenterteilung: 30.03.2005
(21) Anmeldenummer: 99115014.5
(22) Anmeldetag: 30.07.1999
(51) Int. Cl.: B60T 17/00, B60T 11/32, B60T 17/02

(54) **Druckluftversorgungseinrichtung für Fahrzeug-Druckluftanlagen und Verfahren zum Energiesparen bei Druckluftaufbereitungsanlagen**
Compressed-air supply device for vehicle compressed air systems and method for power conserving at compressed air processing system
Installation d'alimentation en air comprimé pour systèmes à air comprimé de véhicules et procédé d'économie d'énergie dans des installations de préparation d'air comprimé

(30) Priorität: 31.07.1998 DE 19834705
(43) Veröffentlichungstag der Anmeldung: 02.02.2000
(73) Patentinhaber: KNORR-BREMSE Systeme für Nutzfahrzeuge GmbH, 80809 München (DE)
(72) Erfinder: Birkeneder, Franz-Josef, 94501 Aldersbach (DE); Hilberer, Eduard, 68766 Hockenheim (DE)
(74) Vertreter: Seemann, Ralph

(56) Entgegenhaltungen:
- EP-A- 0 119 505
- DE-A- 3 909 531
- DE-A- 3 930 814
- DE-A- 4 421 575
- DE-A- 19 515 895
- DE-A- 19 529 684

## Beschreibung

Die Erfindung betrifft eine Druckluftversorgungseinrichtung für Fahrzeug-Druckluftanlagen gemäß dem Oberbegriff des Patentanspruchs 1 und ein Verfahren zum Energiesparen bei Druckluftaufbereitungsanlagen insbesondere bei Fahrzeug-Druckluftanlagen.

Derartige Druckluftversorgungseinrichtungen für Fahrzeug-Druckluftanlagen sind aus der DE 195 15 895 A1 bekannt. Dieses Dokument offenbart einen Luftkompressor, von dessen Ausgang zur Versorgung der Druckluftanlage eine Förderleitung zu einem Lufttrockner führt. Die Förderleitung ist ausgangsseitig des Lufttrockners in zu wenigstens zwei Verbraucherkreisen führende Leitungszweige verzweigt. Der Druck in den Verbraucherkreisen ist durch Drucksensoren überwachbar. Es ist außerdem eine Steuerelektronik vorgesehen, an welche die Drucksensoren angeschlossen sind. Die Verbraucherkreise sind durch ein von der programmierbaren Steuerelektronik schaltbares, im jeweiligen Förderleitungszweig liegendes Sperrglied von der Druckluftversorgung abtrennbar. Hierdurch ist die Zufuhr von Druckluft in die Verbraucherkreise und die Entnahme von Druckluft zur Überleitung von einem Kreis in den anderen von der Steuerelektronik steuerbar. Bei derartigen gattungsgemäßen Druckluft-Versorgungseinrichtungen mit integrierten elektronischen Druckregler zweigen alle Kreise des Mehrkreisschutzventils von einer zentralen Versorgungsbohrung ab, um eine beliebige Füllreihenfolge und einen sequentiellen Luftaustausch zwischen den Kreisen zu ermöglichen. Der in diesem Dokument offenbarte Luftkompressor wird über eine elektromagnetische Kupplung geschaltet.

In der DE 195 15 895 A1 ist ein elektromagnetisches Stellglied gezeigt, welches durch eine elektrische Leitung vom Steuergerät gesteuert wird. Das elektromagnetische Stellglied dient zum Betätigen einer Kompressorschaltkupplung. Derartige Kupplungen dienen zum Unterbrechen eines Antriebs- bzw. Torsionstranges in der Antriebstechnik. Derartige Kupplungen sind sehr preisintensiv und haben ein erhebliches Bauvolumen.

Der in diesem Dokument offenbarte Kupplungskompressor wird mittels eines Kraftschlusses zum Antriebsmotor betrieben. Zum Wegschalten bzw. Abschalten muß der Kraftschluß getrennt werden, wofür erhebliche Kräfte benötigt werden.

Aus diesem Dokument ist es nicht entnehmbar, daß und auf welche Weise moderne energiesparende Schaltkompressoren betrieben werden können. Derartige Energiesparschaltkompressoren werden mittels eines internen oder externen pneumatischen, elektromagnetischen oder elektromechanischen Stellgliedes geschaltet. Hierbei werden Ventile umgeschaltet, so daß beim Wegschalten bzw. Abschalten der Kompressor nicht gegen einen hohen Druck pumpt, sondern beispielsweise in die Umgebung. Die Stellglieder ermöglichen es, Schaltverluste zu minimieren. Hierbei ist die Ansteuerung zeitkritisch, da der Schaltvorgang in bestimmten Kolbenpositionen stattfinden muß.

Ferner ist in DE 44 21 575 A1 ein Druckregler für Druckluftbeschaffungsanlagen von Kraftfahrzeugen beschrieben, der über eine Leitung mit einem Mehrkreisschutzventil verbunden ist.

Es ist somit Aufgabe der vorliegenden Erfindung, eine Druckluftversorgungseinrichtung anzugeben, mit der eine Ansteuerung von Energiesparkompressoren möglich ist und mit der im Betrieb Energie gespart wird, wobei die Schaltgeschwindigkeit des Kompressors möglichst groß sein soll. Es ist ferner Aufgabe der vorliegenden Erfindung eine Druckluftversorgungseinrichtung anzugeben, die in kompakter und einfacher Bauweise herstellbar ist. Ferner ist es Aufgabe der vorliegenden Erfindung, ein möglichst einfaches Verfahren zum Energiesparen bei Druckluftaufbereitungsanlagen anzugeben.

Gelöst werden diese Aufgaben durch die Merkmale des Patentanspruchs 1 und die Merkmale des Patentanspruchs 13. Weiterbildungen der Erfindung sind Gegenstand der abhängigen Ansprüche.

Erfindungsgemäß ist eine Druckluftversorgungseinrichtung für Fahrzeug-Druckluftanlagen umfassend ein Mehrkreisschutzventil, eine Versorgungsleitung zur Versorgung der Kreise des Mehrkreisschutzventils mit Druckluft, und einen Kompressor, wobei eine Steuer-und/oder Regelelektronik vorgesehen ist, dadurch weitergebildet, dass die Steuer- und/oder Regelelektronik ein den Kompressor schaltendes Schaltglied wenigstens mittelbar steuert oder regelt, derart, dass das Schaltglied den Kompressor bei Unterschreiten und/oder Überschreiten eines Schwellwertes des Drucks in der Versorgungsleitung und/oder des Drucks in oder hinter den Kreisen des Mehrkreisschutzventils schaltet, wobei der Kompressor ein Schaltkompressor ist und das Schalten zeitlich auf die Kolbenposition des Kompressors abgestimmt ist. Durch diese erfindungsgemäße Ausgestaltung ist gewährleistet, daß insbesondere Energiesparkompressoren, wie insbesondere Schaltkompressoren betrieben werden können.

Vorzugsweise ist die Versorgungsleitung zwischen dem Druckregler und dem Mehrkreisschutzventil angeordnet. Dadurch, dass der Kompressor ein Schaltkompressor ist, ist eine hohe Energieeinsparung und eine relativ hohe Schaltgeschwindigkeit möglich.

Ferner vorzugsweise umfaßt der Druckregler ein Ventil, insbesondere ein Magnetventil, wobei insbesondere der Kompressor über das Ventil des Druckreglers gesteuert oder geregelt wird. Durch diese Maßnahme werden bevorzugterweise vorhandene Komponenten verwendet, wodurch eine kompakte Bauweise der Druckluftversorgungseinrichtung ermöglicht wird und Kosten gespart werden.

Eine kompakte und einfach zu montierende Bauweise ist vorzugsweise dann möglich, wenn die Versorgungsleitung_eine Belüftungsbohrung und insbesondere eine zentrale Belüftungsbohrung ist. Vorzugsweise ist die Fahrzeug-Druckluftanlage elektromechanisch. Vorzugsweise sind der Druckregler und das Mehrkreisschutzventil in einer Baueinheit untergebracht. Diese Baueinheit kann insbesondere vorzugsweise auch den Kompressor enthalten. Vorzugsweise ist der Druckregler elektropneumatisch. Vorzugsweise ist das Mehrkreisschutzventil elektropneumatisch. Ferner vorzugsweise ist das Mehrkreisschutzventil ein Vierkreisschutzventil.

Wenn vorzugsweise wenigstens ein Drucksensor vorgesehen ist, kann die Steuerung oder Regelung in Abhängigkeit bzw. unter Berücksichtigung von gewissen in der Druckluftversorgungseinrichtung herrschenden Drücken geschehen. Wenn vorzugsweise ein Drucksensor zum Messen des Drucks in der Versorgungsleitung vorgesehen ist, kann eine sinnvolle Steuerung oder Regelung des Kompressors mittels nur eines Drucksensors geschehen.

Wenn vorzugsweise zwischen dem Druckregler und der Versorgungsleitung und insbesondere dem Drucksensor zum Messen des Drucks in der Versorgungsleitung ein Sperrventil, insbesondere ein Rückschlagventil, vorgesehen ist, ist ein sicherer Betrieb der Druckluftversorgungseinrichtung möglich. Wenn vorzugsweise Druck in oder hinter jedem Kreis des Mehrkreisschutzventils mittels Drucksensoren meßbar ist, ist außer der Regelung oder Steuerung des Kompressors auch die Zufuhr von Druckluft in die Verbraucherkreise und die Entnahme von Druckluft zur Überleitung von einem Kreis in den anderen steuerbar oder regelbar.

Vorzugsweise ist das Schaltglied ein pneumatisches Schaltglied, wodurch das Schalten des Kompressors durch im wesentlichen pneumatische Mittel ermöglicht wird und so wenig elektronische Komponenten benötigt werden. Hierzu ist vorzugsweise das pneumatische Schaltglied unmittelbar mittels eines Vorsteuerventil steuerbar.

Wenn vorzugsweise das Schaltglied ein elektromagnetisches Schaltglied ist, ist eine elektronische Steuerung oder Regelung möglich.

Wenn vorzugsweise die zum elektromagnetischen Schaltglied führende elektronische Leitung eine CAN-Leitung ist, können zusätzliche Funktionen auf diese Leitung aufgeschaltet werden, wie beispielsweise Fahrzeugführungsfunktionen oder die Dieseleinspritzung. CAN ist üblicherweise bekannt und kommt vom englischen Begriff Controller Area Network und ist ein speziell für den Kfz-Einsatz konzipiertes serielles Bussystem. Siehe hierzu beispielsweise "Kraftfahrtechnisches Taschenbuch", Robert Bosch GmbH, 22. Auflage, 1995, Seite 800 ff.

Vorzugsweise ist zwischen der Steuer- und/oder Regelelektronik eine weitere Steuer- und/oder Regelelektronik angeordnet, die weitere Steuer- und/oder Regelfunktionen wahrnehmen kann. Im Rahmen dieser Erfindung umfaßt der Begriff Steuer-und/oder Regelelektronik insbesondere eine Steuervorrichtung, eine Regelvorrichtung, ein Steuergerät und ein Regelgerät.

Vorzugsweise ist eine Druckluftanlage mit einer vorbeschriebenen Druckluftversorgungseinrichtung versehen.

Erfindungsgemäß weist ein Verfahren zum Energiesparen bei Druckluftaufbereitungsanlagen insbesondere bei Fahrzeug-Druckluftanlagen die folgenden Verfahrensschritte auf:
- Messen eines in einer Versorgungsleitung, die zwischen einem Kompressor oder einem Druckregler und einem Mehrkreisschutzventil angeordnet ist, herrschenden Drucks und/oder Messen der in oder hinter den Kreisen eines Mehrkreisschutzventils herrschenden Drücke,
- Vergleichen des gemessenen Drucks oder der gemessenen Drücke mit vorgebbaren Schwellwerten,
und den weiteren Verfahrensschritt, dass
- eine Steuer- und/oder Regelelektronik ein den Kompressor schaltendes Schaltglied wenigstens mittelbar steuert oder regelt, derart, dass das Schalten des Kompressors zeitlich auf die Kolbenposition des Kompressors abgestimmt ist, wobei das Schaltglied den Kompressor bei Unterschreiten und/oder Überschreiten eines Schwellwertes des Drucks in der Versorgungsleitung und/oder des Drucks in oder hinter den Kreisen des Mehrkreisschutzventils schaltet.

Durch Betätigen eines Schaltglieds, das einen Kompressor schaltet, wird erreicht, daß der Kompressor bei Unterschreiten des oder der Schwellwerte Druckluft fördert und bei Überschreiten des oder der Schwellwerte Druckluft nicht fördert.

Durch dieses erfindungsgemäße Verfahren wird ein Energiesparen durch sinnvolles Schalten des Kompressors und insbesondere eines Schaltkompressors möglich. Durch dieses Schalten bzw. Ein- und Ausschalten ist es möglich, daß für den Kompressor zwischen Förder- und Nichtförderphase unterschieden werden kann. Durch das Schalten, das zeitlich auf die Kolbenposition des Kompressors abgestimmt, kann dieser im bevorzugten Zeitpunkt jeweils ein- oder ausgeschaltet werden.

Vorzugsweise geschieht das Schalten elektromagnetisch.

Vorzugsweise geschieht das Schalten pneumatisch.

Erfindungsgemäß werden Energiesparkompressoren für Fahrzeug-Druckluftanlagen verwendet. Vorzugsweise sind die Energiesparkompressoren Schaltkompressoren.

Vorzugsweise werden Energiesparkompressoren für Druckluftversorgungseinrichtungen der vorgenannten Art verwendet.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bezüglich der Offenbarung aller im Text nicht näher erläuterten erfindungsgemäßen Einzelheiten ausdrücklich verwiesen wird. Es zeigen:
Fig. 1 eine erfindungsgemäße Ausführungsform mit pneumatischem Vorsteuerventil in schematischer Darstellung,
Fig. 2 eine weitere erfindungsgemäße Ausführungsform mit elektromagnetischem Stellglied in schematischer Darstellung, und
Fig. 3 einen Teil einer erfindungsgemäßen Ausführungsform in schematischer Darstellung, bei der die Nutzung eines seriellen Datenübertragungssystems wie zum Beispiel das CAN möglich ist, und
Fig. 4 eine weitere erfindungsgemäße Ausführungsform mit pneumatischem Stellglied in schematischer Darstellung.

In den folgenden Figuren sind jeweils gleiche oder entsprechende Teile mit denselben Bezugszeichen bezeichnet, so daß auf eine erneute Vorstellung verzichtet wird und lediglich die Abweichungen der in diesen Figuren dargestellten Ausführungsbeispiele gegenüber dem ersten Ausführungsbeispiel erläutert werden:

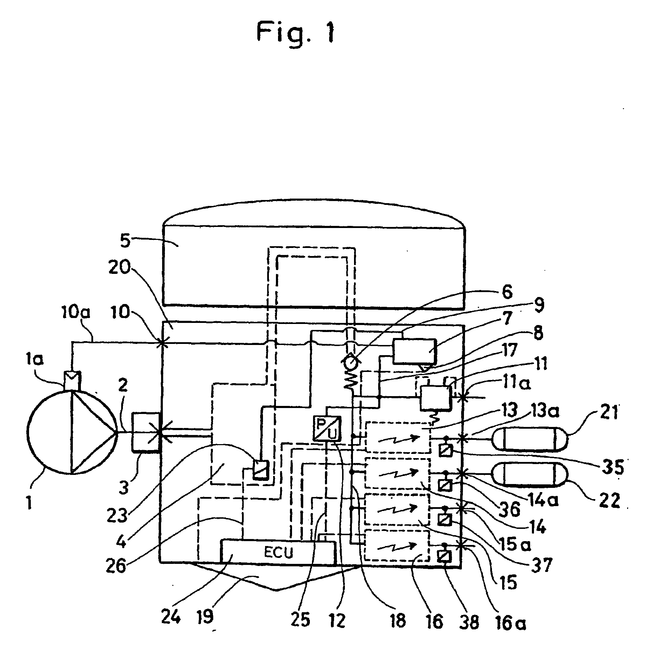

Fig. 1 zeigt eine erfindungsgemäße Ausführungsform einer Druckluftversorgungseinrichtung für Fahrzeugdruckluftanlagen. Die Druckluftversorgungseinrichtung umfaßt eine Lufttrocknerpatrone 5 und ein gemeinsames Gehäuse 20. Ein Energiesparkompressor 1 ist über eine Kompressorleitung 2 mit einem Eingangsstutzen 3 an den gemeinsamen Gehäuse 20 angebracht. In dem gemeinsamen Gehäuse 20 sind ferner ein elektropneumatischer Druckregler 4 und ein Vierkreisschutzventil angeordnet. Die von dem Vierkreisschutzventil gelangenden Luftdrücke werden von den einzelnen Drucksteuereinheiten bzw. Kreisen 13 bis 16 über entsprechende Anschlußstutzen 13a bis 16a zu Behältern für die jeweiligen Kreise 21 und 22 geleitet. In diesem Ausführungsbeispiel sind lediglich zwei der vier Behälter dargestellt.

Die vom Energiesparkompressor 1 geförderte Druckluft wird über eine Kompressorleitung 2 zum Eingangsstutzen 3 der Druckluftversorgungseinrichtung zugeführt. Im Rahmen dieser Erfindung bedeutet Druckluftversorgungseinrichtung eine Einrichtung, die sowohl einen Kompressor 1, die Kompressorleitung 2 und den Eingangsstutzen 3 umfaßt, als auch eine die diese Komponenten in einem des gemeinsamen Gehäuses 20 beinhaltet und auch eine Einrichtung, bei der der Kompressor 1 mittels einer Leitung mit dem Gehäuse verbindbar ist. Von dem Eingangsstutzen 3 wird Druckluft dem elektropneumatischem Druckregler 4 und danach durch die Lufttrocknerpatrone 5 geführt. Nachgeordnet ist ein Rückschlagventil 6, von dem ausgehend eine zentrale Versorgungsleitung 18 weitergeführt wird. Von der zentralen Druckluftversorgungsleitung 18 werden die elektromechanischen Drucksteuereinheiten 13 bis 16 mit Druckluft versorgt. Die Drucksteuereinheiten 13 bis 16 werden von der gemeinsamen Steuerelektronik 24 angesteuert und geben die Druckluft über die zugehörigen Anschlußstutzen 13a bis 16a an Druckluftkreise des Fahrzeugs ab und zwar gemäß einstellbarem und/oder vorprogrammierbaren Parametern.

Erreicht der Druck, der durch den Drucksensor 12 hinter dem Rückschlagventil 6 gemessen wird, den oberen Schwellwert, so schaltet die gemeinsame Steuerelektronik 24 die Signalleitung 26 derart, daß die pneumatische Steuerleitung 10a über den Anschluß 10 belüftet wird, wodurch das pneumatische Stellglied 1a umschaltet und der Kompressor 1 zu fördern aufhört. Dieses geschieht mittels Steuerung oder Regelung eines pneumatischen Vorsteuerventils 7 über eine Steuerbohrung 9, wobei das Vorsteuerventil 7 über die Vorsteuerventilversorgungsleitung 17 mit Druckluft versorgt wird. Der Meßwert des gemessenen Drucks wird über die elektrische Verbindung 25 zur Steuerelektronik 24 geleitet.

Fällt der Druck in der Versorgungsleitung 18 hinter dem Rückschlagventil 6 durch beispielsweise Luftentnahme wie beispielsweise beim Abbremsen des Fahrzeuges unter einen unteren Schwellwert, so wird durch die gemeinsame Steuerelektronik 24 über die Signalleitung 26 ein Invertieren des Magnetventils 23 hervorgerufen, wodurch das pneumatische Vorsteuerventil 7 derart umgeschaltet wird, daß die pneumatische Steuerleitung 10a entlüftet wird. Vorzugsweise wird diese Steuerleitung 10a schnell entlüftet. Hierdurch wird das pneumatische Stellglied 1a wieder in seine Ausgangslage bewegt und der Kompressor 1 beginnt wieder zu fördern.

Die Entlüftung der Steuerleitung 10a geschieht bevorzugterweise über die Entlüftung des Vorsteuerventils 8 und/oder über die Zentralentlüftung 19.

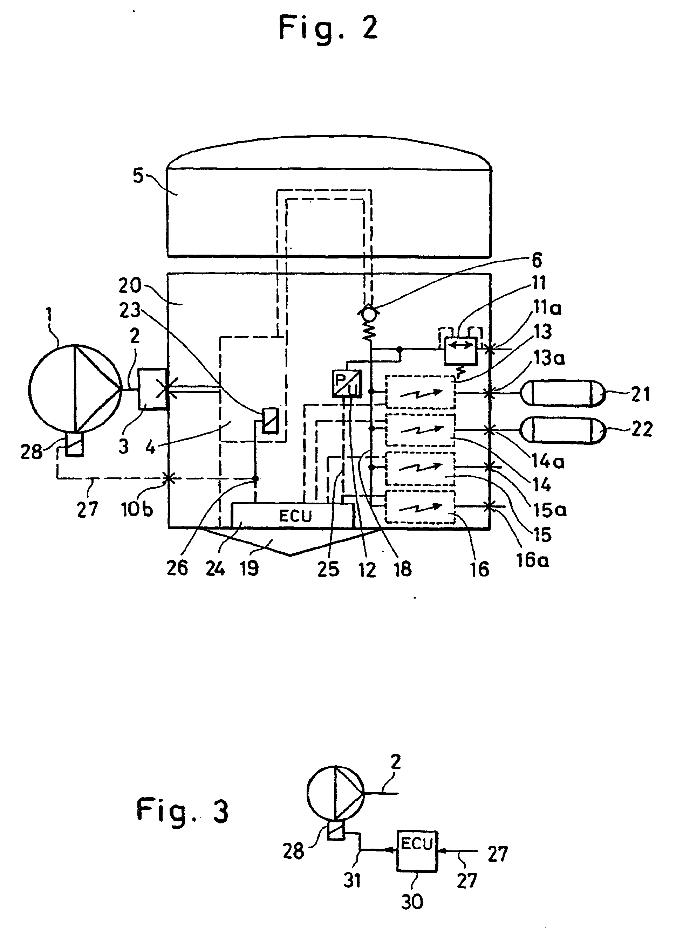

Fig. 2 zeigt eine weitere Ausführungsform der vorliegenden Erfindung, bei der anstelle des pneumatischen Stellgliedes 1a ein elektromagnetisches Stellglied 28 verwandt wird. Das elektromagnetische Stellglied 28 wird über eine Leitung 27 an den elektrischen Anschluß 10b und einer elektrischen Leitung 26 mit der gemeinsamen Steuerelektronik 24 verbunden. Bei Erreichen der jeweiligen Drücke in der zentralen Versorgungsleitung 18 hinter dem Rückschlagventil 6 wird auf die elektrische bzw. elektronische Leitung 27 ein Signal aufgeschaltet, welches das elektromagnetische Stellglied 28 entweder aktiviert oder deaktiviert, je nachdem welcher Druck gemessen wurde. Hierdurch wird dann der Kompressor 1 auf Fördern oder Nichtfördern geschaltet.

Sowohl in Fig. 2 und Fig. 1 ist ein Überströmventil 11 für die Luftfederung dargestellt, die von der zentralen Versorgungsleitung 18 mit Druckluft versorgt werden und Druckluft den Anschlußstutzen 11a abgeben.

Fig. 3 zeigt eine weitere Version der Ausführungsform von Fig. 2, wobei die elektronische Leitung 27 als CAN-Verbindungsleitung ausgeführt ist. Diese führt vom Anschluß 10b zu einem Steuergerät 30, das zusätzlich Funktionen steuern und/oder regeln kann. Hierbei ist beispielsweise an eine Dieseleinspritzung oder an Fahrzeugführungsfunktionen gedacht. Sofern das Steuergerät 30 den Befehl zur Aktivierung des elektromagnetischen Stellgliedes 28 erhält, wird die Leitung 31 mit Strom versorgt. Hierdurch wird das elektromagnetische Stellglied 28 aktiviert.

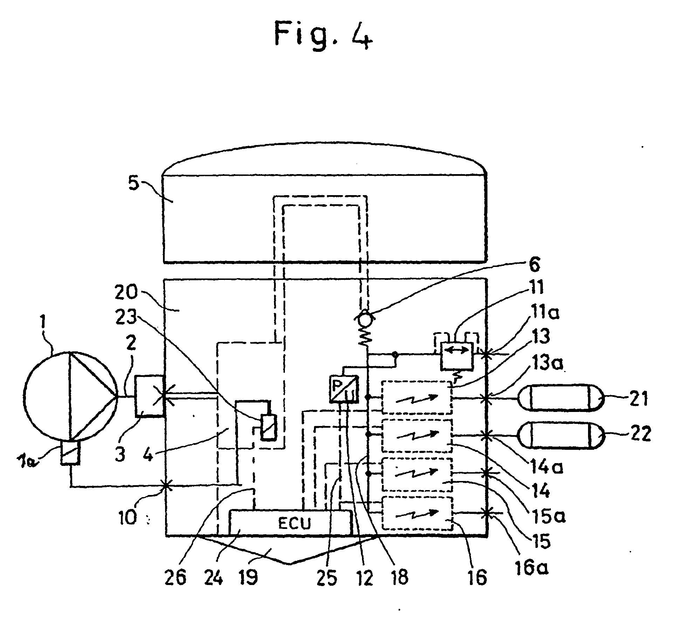

Fig. 4 zeigt eine weitere erfindungsgemäße Ausführungsform mit pneumatischem Stellglied 1a in schematischer Darstellung.

Bei dem Ausführungsbeispiel gemäß Fig. 4 ist im Vergleich zu dem Ausführungsbeispiel der Fig. 1 das Magnetventil 23 direkt mit dem pneumatischen Stellglied 1a verbunden. Hierdurch entfällt die Notwendigkeit der Benutzung eines pneumatischen Vorsteuerventils.

### Bezugszeichenliste

- 1: Energiesparkompressor
- 1a: pneumatisches Stellglied
- 2: Kompressorleitung
- 3: Eingangsstutzen
- 4: elektropneumatischer Druckregler
- 5: Lufttrocknerpatrone
- 6: Rückschlagventil
- 7: pneumatisches Vorsteuerventil
- 8: Entlüftung des Vorsteuerventils
- 9: Steuerbohrung
- 10: Anschluß
- 10a: pneumatische Steuerleitung
- 10b: elektronischer oder elektrischer Anschluß
- 11: Überströmventil für Luftfederung
- 11a: Anschlußstutzen für Luftfederung
- 12: Drucksensor
- 13: elektromechanische Drucksteuereinheit für Kreis 1
- 13a: Anschlußstutzen für 13
- 14: elektromechanische Drucksteuereinheit für Kreis 2
- 14a: Anschlußstutzen für 14
- 15: elektromechanische Drucksteuereinheit für Kreis 3
- 15a: Anschlußstutzen für 15
- 16: elektromechanische Drucksteuereinheit für Kreis 4
- 16a: Anschlußstutzen für 16
- 17: Vorsteuerventil
- 18: zentrale Versorgungsleitung
- 19: Zentralentlüftung
- 20: gemeinsames Gehäuse
- 21: Behälter für Kreis 1
- 22: Behälter für Kreis 2
- 23: Magnetventil
- 24: gemeinsame Steuerelektronik
- 25: elektrische Verbindung zum Drucksensor
- 26: elektrische oder elektronische Steuerleitung
- 27: elektrische oder elektronische Steuerleitung
- 28: elektromagnetisches Stellglied
- 30: zusätzliches Steuergerät
- 31: elektrische Leitung
- 35: Drucksensor
- 36: Drucksensor
- 37: Drucksensor
- 38: Drucksensor

## Patentansprüche

1. Druckluftversorgungseinrichtung für Fahrzeug-Druckluftanlagen umfassend ein Mehrkreisschutzventil (13-16), eine Versorgungsleitung (18) zur Versorgung der Kreise des Mehrkreisschutzventils (13-16) mit Druckluft, und einen Kompressor (1), wobei eine Steuer- und/oder Regelelektronik (24) vorgesehen ist, **dadurch gekennzeichnet, dass** die Steuer- und/oder Regelelektronik (24) ein den Kompressor (1) schaltendes Schaltglied (1a, 28) wenigstens mittelbar steuert oder regelt, derart, dass das Schaltglied (1a, 28) den Kompressor (1) bei Unterschreiten und/oder Überschreiten eines Schwellwertes des Drucks in der Versorgungsleitung (18) und/oder des Drucks in oder hinter den Kreisen des Mehrkreisschutzventils (13-16) schaltet, wobei der Kompressor (1) ein Schaltkompressor ist und wobei das Schalten zeitlich auf die Kolbenposition des Kompressors (1) abgestimmt ist.

2. Druckluftversorgungseinrichtung nach Anspruch 1, **dadurch gekennzeichnet, dass** die Versorgungsleitung (18) zwischen dem Druckregler (4) und dem Mehrkreisschutzventil (13-16) angeordnet ist.

3. Druckluftversorgungseinrichtung nach Anspruch 1 oder 2, **dadurch gekennzeichnet, dass** der Druckregler (4) ein Ventil (23), insbesondere ein Magnetventil umfasst, wobei der Kompressor (1) über das Ventil (23) des Druckreglers (4) gesteuert oder geregelt wird.

4. Druckluftversorgungseinrichtung nach einem oder mehreren der Ansprüche 1 bis 3, **dadurch gekennzeichnet, dass** wenigstens ein Drucksensor (12, 35-38) vorgesehen ist.

5. Druckluftversorgungseinrichtung nach Anspruch 4, **dadurch gekennzeichnet, dass** ein Drucksensor (12) zum Messen des Drucks in der Verbindungsleitung (18) vorgesehen ist.

6. Druckluftversorgungseinrichtung nach Anspruch 5, **dadurch gekennzeichnet, dass** zwischen dem Druckregler (4) und der Versorgungsleitung (18) und insbesondere dem Drucksensor (12) zum Messen des Drucks in der Versorgungsleitung (18) ein Sperrventil (6), insbesondere ein Rückschlagventil, vorgesehen ist.

7. Druckluftversorgungseinrichtung nach einem der Ansprüche 4 bis 6, **dadurch gekennzeichnet, dass** der Druck in oder hinter jedem Kreis des Mehrkreisschutzventils (13-16) mittels Drucksensoren (38) messbar ist.

8. Druckluftversorgungseinrichtung nach einem oder mehreren der Ansprüche 1 bis 7, **dadurch gekennzeichnet, dass** das Schaltglied (1a) ein pneumatisches Schaltglied ist.

9. Druckluftversorgungseinrichtung nach Anspruch 8, **dadurch gekennzeichnet, dass** das pneumatische Schaltglied (1a) unmittelbar mittels eines Vorsteuerventils (7) steuerbar ist.

10. Druckluftversorgungseinrichtung nach einem oder mehreren der Ansprüche 1 bis 9, **dadurch gekennzeichnet, dass** das Schaltglied (28) ein elektromagnetisches und/oder elektromechanisches Schaltglied ist.

11. Druckluftversorgungseinrichtung nach Anspruch 10, **dadurch gekennzeichnet, dass** zwischen Steuer- und/oder Regelelektronik (24) eine weitere Steuer- und/oder Regelelektronik (30) zur Ansteuerung des Schaltgliedes (28) angeordnet ist.

12. Druckluftversorgungseinrichtung nach Anspruch 11, **dadurch gekennzeichnet, dass** die zwischen den beiden Regelektroniken (24, 30) vorgesehene Leitung als CAN-Leitung (27) ausgeführt ist.

13. Verfahren zum Energiesparen bei Druckluftaufbereitungsanlagen, insbesondere bei Fahrzeug-Druckluftanlagen, mit den folgenden Verfahrensschritten:
- Messen eines in einer Versorgungsleitung (18), die zwischen einem Druckregler (4) und einem Mehrkreisschutzventil (13-16) angeordnet ist, herrschenden Drucks und/oder Messen der in oder hinter den Kreisen eines Mehrkreisschutzventils (13-16) herrschenden Drücke,
- Vergleichen des gemessenen Drucks oder der gemessenen Drücke mit vorgebbaren Schwellwerten,
und mit dem weiteren Verfahrensschritt, dass
- eine Steuer- und/oder Regelelektronik (24) ein den Kompressor (1) schaltendes Schaltglied (1a, 28) wenigstens mittelbar steuert oder regelt, derart, dass das Schalten des Kompressors (1) zeitlich auf die Kolbenposition der Kompressors (1) abgestimmt ist, wobei das Schaltglied (1a,28) bei Unterschreiten und/oder Uberschreiten eines Schwellwertes des Drucks in der Versorgungsleitung (18) und/oder des Drucks in oder hinter den Kreisen des Mehrkreisschutzventils (13-16) den Kompressor (1) schaltet.

14. Verfahren nach Anspruch 13, **dadurch gekennzeichnet, dass** das Schalten elektromagnetisch geschieht.

15. Verfahren nach Anspruch 13, **dadurch gekennzeichnet, dass** das Schalten pneumatisch geschieht.

16. Verwendung von Energiesparkompressoren in einer Druckluftversorgungseinrichtung nach einem oder mehreren der Ansprüche 1 bis 12.

## Claims

1. Compressed air-supply device for compressed-air supply systems for vehicles, comprising a multiple-circuit protection valve (13 - 16), a supply line (18) for supplying the circuits of the multiple-circuit protection valve (13 - 16) with compressed air, and a compressor (1), wherein an electronic control and/or closed-loop control system (24) is provided, **characterized in that** the electronic control and/or closed-loop control system (24) at least indirectly controls or adjusts a switching element (1a, 28) which switches the compressor (1) when the pressure in the supply line (18) and/or the pressure in or downstream of the circuits of said multiple-circuit protection valves (13 - 16) drops below and/or exceeds a threshold value, wherein the compressor (1) is a switching compressor and wherein the switching is matched temporally to the piston position of the compressor (1).

2. Compressed-air supply device according to Claim 1, **characterized in that** the supply line (18) is arranged between the pressure regulator (4) and the multiple-circuit protection valve (13-16).

3. Compressed-air supply device according to claims 1 or 2, **characterized in that** the pressure regulator (4) comprises a valve (23), especially a magnetic valve, wherein the compressor (1) is controlled or adjusted via the valve (23) of the pressure regulator.

4. Compressed-air supply device according to one or more of Claims 1 to 3, **characterized in that** at least one pressure sensor (12, 35 - 38) is provided.

5. Compressed-air supply device according to Claim 4, **characterised in that** a pressure sensor (12) is provided for measuring the pressure in the supply line (18).

6. Compressed-air supply device according to Claim 5, **characterised in that** a check valve (6), in particular a non-return valve, is provided between the pressure regulator (4) and the supply line (18) and especially the pressure sensor (12) for measuring the pressure in the supply line (18).

7. Compressed-air supply device according to any of Claims 4 to 6, **characterised in that** the pressure in or downstream of each circuit of the multiple-circuit protection valves (13 - 16) can be measured by way of pressure sensors (38).

8. Compressed-air supply device according to one or more of Claims 1 to 7, **characterised in that** the switching element (1a) is a pneumatic switching element.

9. Compressed-air supply device according to Claim 8, **characterised in that** the pneumatic switching element (1a) is controllable directly by means of a pilot valve (7).

10. Compressed-air supply device according to one or more of Claims 1 to 9, **characterised in that** the switching element (28) is an electromagnetic and/or electro-mechanical switching element.

11. Compressed-air supply device according to Claim 10, **characterised in that** a further electronic control and/or closed-loop control system (30) is disposed between the electronic control and/or closed-loop control system (24) for controlling the switching element (28).

12. Compressed-air supply device according to Claim 11, **characterised in that** the line provided between the two electronic control systems (24, 30) is configured as CAN-line (27).

13. Method of conserving power in compressed-air processing systems, especially in compressed-air systems in vehicles, comprising the following steps of operation:
- measuring a pressure prevailing in a line (18), which is disposed between a pressure regulator (4) and a multiple-circuit protection valve (13 - 16) and/or measuring the pressures prevailing in or downstream of the circuits the multiple-circuit protection valves (13 - 16),
- comparing the measured pressure or the measured pressures with predeterminable threshold values,
and including the further step of operation that
- an electronic control and/or closed-loop control system (24) at least indirectly controls or adjusts a switching element (1a, 28) switching the compressor (1) in such a way that the switching of the compressor (1) is matched temporally to the piston position the compressor (1), wherein the switching element (1a, 28) switches the compressor (1) when the pressure in the supply line (18) and/or the pressure prevailing in or downstream of the circuits of the multiple-circuit protection valves (13 - 16) drops below or exceeds a threshold value of the pressure.

14. Method according to Claim 13, **characterized in that** the switching is performed electromagnetically.

15. Method according to Claim 13, **characterized in that** the switching is performed pneumatically.

16. Use of energy saving compressors in a compressed-air supply device according to one or several of the Claims 1 to 12.

## Revendications

1. Dispositif d'alimentation en air comprimé pour des installations à air comprimé de véhicules, comprenant une soupape de protection à plusieurs circuits (13 - 16), un conduit d'alimentation (18) pour l'alimentation des circuits de la soupape de protection à plusieurs circuits (13 - 16) en air comprimé, et un compresseur (1), dans lequel est disposé un système électronique de commande et/ou de réglage (24), **caractérisé en ce que** ledit système électronique de commande et/ou de réglage (24) commute ledit compresseur (1) lorsque la pression dans ledit conduit d'alimentation (18) et/ou la pression régnant dans les ou en aval des circuits de ladite soupape de protection à plusieurs circuits (13 - 16) tombe en dessous et/ou dépasse une valeur limite, le compresseur (1) étant un compresseur commutateur et la commutation étant ajustée dans le temps sur la position du piston du compresseur (1)

2. Dispositif d'alimentation en air comprimé selon la revendication 1, **caractérisé en ce que** ledit conduit d'alimentation (18) est disposé entre le régulateur de pression (4) et ladite soupape de protection à plusieurs circuits (13 - 16).

3. Dispositif d'alimentation en air comprimé selon l'une quelconque des revendications 1 à 2, **caractérisé en ce que** ledit régulateur de pression (4) comprend une soupape (23), en particulier une soupape magnétique, ledit compresseur (1) étant commandé ou réglé via la soupape (23) dudit régulateur de pression (4).

4. Dispositif d'alimentation en air comprimé selon l'une ou plusieurs des revendications 1 à 3, **caractérisé en ce qu'**il est pourvu d'au moins un détecteur de pression (12, 35- 38).

5. Dispositif d'alimentation en air comprimé selon la revendication 4, **caractérisé en ce qu'**il est pourvu d'un détecteur de pression (12) destiné à mesurer la pression dans ledit conduit d'alimentation (18).

6. Dispositif d'alimentation en air comprimé selon la revendication 5, **caractérisé en ce qu'**un clapet anti-retour (6), en particulier une soupape de retenue, est disposé entre ledit régulateur de pression (4) et ledit conduit d'alimentation (18) et particulièrement entre ledit détecteur de pression (12) destiné à mesurer la pression dans ledit conduit d'alimentation (18).

7. Dispositif d'alimentation en air comprimé selon l'une quelconque des revendications 4 à 6, **caractérisé en ce que** la pression dans le ou en aval de chaque circuit de ladite soupape de protection à plusieurs circuits (13-16) est apte à être mesuré moyennant des détecteurs de pression (38).

8. Dispositif d'alimentation en air comprimé selon l'une ou plusieurs des revendications 1 à 7, **caractérisé en ce que** l'élément commutateur (1a) est un organe pneumatique commutateur.

9. Dispositif d'alimentation en air comprimé selon la revendication 8, **caractérisé en ce que** ledit organe pneumatique commutateur (1a) est apte à être actionné directement au moyen d'une soupape pilote (7).

10. Dispositif d'alimentation en air comprimé selon l'une ou plusieurs des revendications 1 à 9, **caractérisé en ce que** ledit élément commutateur (28) est un organe électromagnétique et/ou électromécanique de commutation.

11. Dispositif d'alimentation en air comprimé selon la revendication 10, **caractérisé en ce qu'**un autre système électronique de commande et/ou de réglage (30) est disposé entre ledit système électronique de commande et/ou de réglage (24) pour la commande dudit élément commutateur (28).

12. Dispositif d'alimentation en air comprimé selon la revendication 11, **caractérisé en ce que** le conduit disposé entre lesdits deux systèmes électroniques de commande (24, 30) est configuré sous forme d'une ligne CAN (27).

13. Procédé d'économie d'énergie dans des systèmes d'alimentation en air comprimé, en particulier dans des systèmes à air comprimés de véhicules, comprenant les étapes suivantes
- mesurer une pression régnant dans ledit conduit d'alimentation (18), qui est disposé entre un compresseur (1) ou un régulateur de pression (4) et une soupape de protection à plusieurs circuits (13 - 16) et/ou mesurer les pressions régnant dans les ou en aval des circuits de ladite soupape de protection à plusieurs circuits (13 - 16),
- comparer la pression mesurée ou les pressions mesurées par rapport aux valeurs limites prédéterminables,
et comprenant l'étape supplémentaire
- consistant en ce qu'un système électronique de commande et/ ou de réglage (24) commande ou ajuste un élément commutateur (1a, 28), qui commute ledit compresseur (1) au moins indirectement, de telle manière que la commutation du compresseur (1) est ajustée dans le temps sur la position de piston du compresseur (1), l'élément commutateur (1a, 28) commutant le compresseur (1) lorsque la pression dans ledit conduit d'alimentation (18) et/ou la pression régnant dans les ou en aval des circuits de ladite soupape de protection à plusieurs circuits (13-16) tombe en dessous et/ou dépasse une valeur limite.

14. Procédé selon la revendication 13, **caractérisé en ce que** la commutation se fait de façon électromagnétique.

15. Procédé selon la revendication 13, **caractérisé en ce que** la commutation se fait de façon pneumatique.

16. Utilisation de compresseurs à économie d'énergie dans un dispositif d'alimentation en air comprimé selon l'une ou plusieurs des revendications 1 à 12.
